# EUROPÄISCHE PATENTSCHRIFT

(11) **EP 0 665 237 B1**
(45) Veröffentlichungstag und Bekanntmachung des Hinweises auf die Patenterteilung: **30.05.2001**
(21) Anmeldenummer: 95100430.8
(22) Anmeldetag: 13.01.1995
(51) Int. Cl.: C07F 9/53, C07F 9/32, C07F 9/6571

(54) **Verfahren zur Herstellung phosphorhaltiger Dicarbonsäurealkylester und Dicarbonsäuren**
Process for the preparation of phosphorus containing dicarboxylic acid esters and dicarboxylic acids
Procédé de préparation d'acides dicarboxyliques contenant du phosphore ainsi que leurs esters

(30) Priorität: 29.01.1994 DE 4402710
(43) Veröffentlichungstag der Anmeldung: 02.08.1995
(73) Patentinhaber: Clariant GmbH, 65929 Frankfurt am Main (DE)
(72) Erfinder: Kleiner, Hans-Jerg, Dr., D-61476 Kronberg (DE); Freudenberger, Volker, Dr., D-65719 Hofheim (DE); Klein, Peter, Dr., D-65205 Wiesbaden (DE)

(56) Entgegenhaltungen:
- DE-A- 2 646 218
- DE-A- 2 816 100
- JUSTUS LIEBIGS ANN. CHEM. (JLACBF);74; (5); PP.751-64, FARBWERKE HOECHST A.-G.;FRANKFURT/M.; GER. Kleiner H J 'Herstellung und Umsetzungen von Dimethylphosphinoxid'
- CHEMICAL ABSTRACTS, vol. 088, no. 17, 24. April 1978, Columbus, Ohio, US; abstract no. 121383, MURAYAMA T ET AL '(Dialkoxycarbonylalkyl)dialkylphosphine oxides' & JP-A-77 144 627 (TOYOBO CO., LTD.;JAPAN) 2. Dezember 1977
- CHEMICAL ABSTRACTS, vol. 075, no. 13, 27. September 1971, Columbus, Ohio, US; abstract no. 088714, RAZUMOV A I ET AL 'Phosphinic and phosphinous acid derivatives. LXXX. Esters and hydrazides of phosphorylated succinic and glutaric acids' & ZH. OBSHCH. KHIM. (ZOKHA4);71; VOL.41 (6); PP.1239-41, KAZAN. KHIM.-TEKHNOL. INST. IM. KIROVA;KAZAN; USSR
- JOURNAL OF THE AMERICAN CHEMICAL SOCIETY, Bd.78, 1956, WASHINGTON, DC US Seiten 5299 - 5303 MILLER ROBERT CLAY 'Disubstituted Phosphine Oxides. III. Addition to alpha, beta- Unsaturated Nitriles and Carbonyl Compounds'
- CHEMICAL ABSTRACTS, vol. 121, no. 6, 8. August 1994, Columbus, Ohio, US; abstract no. 059359, TOKUTAKE M ET AL 'Epoxy resin-based thermosetting resin films with excellent fire resistance and flexibility' & JP-A-9 480 765 (NIPPON ESTER CO LTD;JAPAN ) 22. März 1994

## Beschreibung

Die Erfindung betrifft ein Verfahren zur Herstellung phosphorhaltiger Dicarbonsäurealkylester und Dicarbonsäuren.

Phosphorhaltige Dicarbonsäurealkylester sind wertvolle Comonomere beziehungsweise Zwischenprodukte zur Herstellung phosphorhaltiger Dicarbonsäuren, die ihrerseits als Monomere Verwendung finden können. Insbesondere für den Einsatz zur Herstellung von Polyestern mit schwer entflammbaren Eigenschaften sind diese Produkte sehr wertvoll (siehe dazu: DE-PS 2646218, JP-OS Sho 52-144627, Deutsche Patentanmeldung Nr. P 43 28 800.6).

Die phosphorhaltigen Dicarbonsäurealkylester werden erhalten durch Anlagerung von P(O)-H-Verbindungen an ungesättigte Dicarbonsäurealkylester. Die Anlagerung kann mit Hilfe von Katalysatoren wie Natriummethylat erfolgen (DE-PS 2646218, JP-OS Sho 52-144627). Im Hinblick auf eine technische Nutzung dieser Produkte ist jedoch ein Herstellverfahren ohne Verwendung von Katalysatoren vorzuziehen. Eine derartige Herstellmethode besteht in dem Mischen der Komponenten und deren Erhitzen über mehrere Stunden bei 100-150°C (Liebigs Anm. Chem. 1974, 751-764). Nachteilig bei diesem Verfahren ist , daß sich zahlreiche P(O)-H-Verbindungen bei dieser Temperaturbelastung zersetzen und somit aus sicherheitstechnischen Gründen für diese Reaktion nicht eingesetzt werden können. Die Ausbeuten sind zudem noch nicht optimal.
Es bestand daher der Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglich macht.

Diese Aufgabe wird gelöst durch ein Verfahren zur Herstellung phosphorhaltiger Verbindungen der Formel (I) 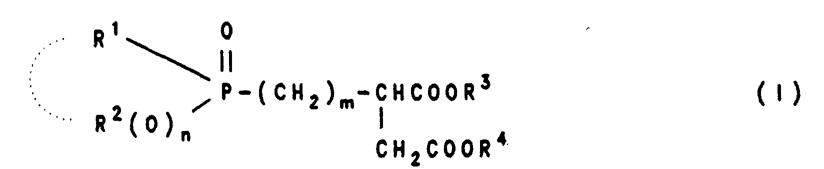 worin R¹ und R² gleich oder verschieden sind und für einen geradkettigen oder verzweigten Alkylrest mit 1 bis 8 Kohlenstoffatomen, einen Cyclohexyl-, einen Cyclopentyl-, einen Aryl-, einen halogen-, alkyl- oder alkoxysubstituierten Arylrest stehen, wobei R¹ und R² zusammen mit dem P-Atom auch einen Ring, insbesondere einen Oxaphosphorinring, bilden können, n und m = 0 oder 1 sind und R³ und R⁴ Alkylreste mit 1 bis 4 Kohlenstoffatomen darstellen oder n = 0, m = 0 oder 1 ist und R³ und R⁴ für H steht, dadurch gekennzeichnet, daß man Verbindungen der Formel II 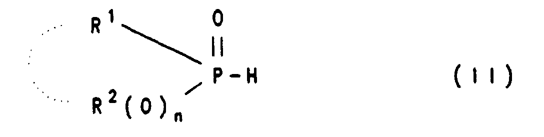 worin R¹ und R² sowie n die obengenannte Bedeutung haben, in Fumarsäure- oder Maleinsäuredialkylester der Formel (III) oder Itaconsäuredialkylester der Formel (IV), 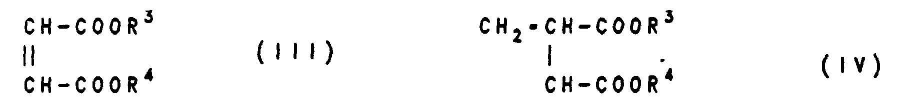 worin R³ und R⁴ die oben angegebene Bedeutung haben, eindosiert und gegebenenfalls einen phosphorhaltigen Dicarbonsäurealkylester der Formel (I), worin n = 0 ist, mit Wasser in Gegenwart katalytischer Mengen einer Säure zu der phosphorhaltigen Dicarbonsäure umsetzt.

Von besonderen Interesse ist das Verfahren für die Herstellung der Verbindungen der Formel (I) worin R¹ und R² zusammen mit dem P-Atom einen Oxaphosphorinring der Formel (V) bilden 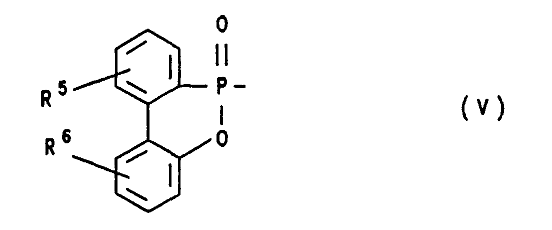 worin R⁵ und R⁶ für Halogen-, Alkyl- oder Alkoxygruppen stehen.

Wichtig ist das Verfahren auch für die Umsetzung von sekundären Phosphanoxiden. Hierbei sind z.B. Dimethylphosphanoxid, Methyl-ethylphosphanoxid, Dipropylphosphanoxid, Diisopropylphosphanoxid, Di-n-butylphosphanoxid, Di-cyclohexylphosphanoxid, Methyl-phenylphosphanoxid, Diphenylphosphanoxid, Di-p-tolylphosphanoxid zu nennen.

Weiterhin ist der Einsatz von 6H-Dibenz-[c,e][1,2]-oxa-phosphorin-6-on von Bedeutung.

Das Verfahren wird so durchgeführt, daß bei 70-180°C, insbesondere 90-170°C, bevorzugt 100-160°C unter Inertgasatmosphäre die Ausgangsstoffe der allgemeinen Formel (II) in Fumarsäure- beziehungsweise Maleinsäuredialkylester oder Itaconsäuredialkylester eindosiert werden. Die Eindosierung erfolgt über einen Zeitraum von 40 Minuten bis 5 Stunden. Vorteilhaft wird noch für eine bis zehn Stunden bei der Reaktionstemperatur nachgerührt. Besitzen diese Ausgangsstoffe niedrige Schmelzpunkte im Bereich von etwa 30 bis 60°C, so können sie auch bevorzugt als Schmelze zugetropft werden. Die Ausbeuten sind sehr gut. Eine Reinigung, falls erforderlich, kann z.B. nach dem bekannten Verfahren der Destillation oder Kristallisation erfolgen. Das Verfahren vorliegender Erfindung kann gegebenenfalls auch kontinuierlich durchgeführt werden. Die in reiner Form anfallenden Verbindungen der Formel (I) können z.B. bei der Herstellung flammwidriger Polyester als Comonomere Verwendung finden.

Verbindungen der Formel (I) mit n = 0 dienen daneben auch als Zwischenprodukte zur Herstellung der entsprechenden Dicarbonsäuren (VI) durch Hydrolyse. Diese Hydrolyse erfolgt zweckmäßig mit Wasser bei 100-150°C in Gegenwart von katalytischen Mengen einer Säure beispielsweise Chlorwasserstoff.

Die Hydrolyse verläuft nach folgendem Schema:

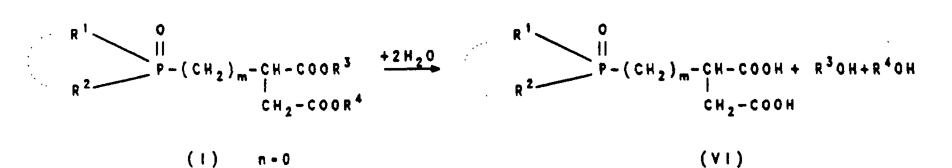

Die Dicarbonsäuren (VI) werden nach den üblichen Methoden der Kristallisation gereinigt. Sie dienen bevorzugt als Comonomere zur Herstellung flammwidriger Polyester.

Von den so erhaltenen Dicarbonsäuren sind besonders die Verbindungen der Formel (VII), 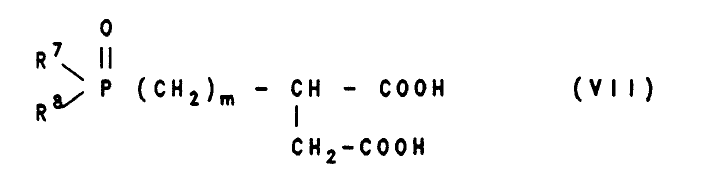 von Interesse, worin R⁷ und R⁸ gleich oder verschieden sind und für einen geradkettigen oder verzweigten Alkylrest mit 1 bis 8 Kohlenstoffatomen, den Cyclohexyl-, den Cyclopentyl-, einen Aryl- oder einen halogen, alkyl- oder alkoxysubstituierten Arylrest stehen und m=0 oder 1 ist.

Von besonderem Interesse sind auch die Verbindungen Diphenylphosphinylmethylbernsteinsäure, Diphenylphosphinylbernsteinsäure, Dimethylphosphinylmethylbernsteinsäure, Dimethylphosphinylbernsteinsäure, Dibutylphosphinylmethylbernsteinsäure, Dibutylphosphinylbernsteinsäure, Dicyclohexylphosphinylmethylbernsteinsäure, Dicyclohexylphosphinylbernsteinsäure.

Besonders vorteilhaft an dem erfindungsgemäßen Verfahren ist, daß die thermolabilen P(O)-H-Verbindungen nur sehr kurz einer Temperaturbelastung ausgesetzt werden, da sie nach dem Eindosieren in der Regel schnell abreagieren. Deshalb kann das Verfahren ohne Sicherheitsprobleme auch in größerem Maßstab durchgeführt werden. Es ist hierbei besonders überraschend, daß bei diesem Verfahren keine Telomerisation gemäß 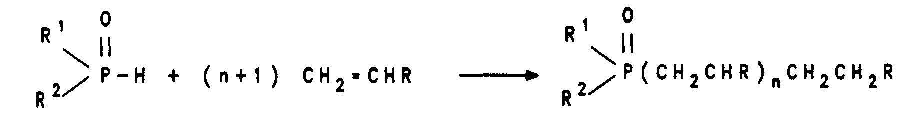 eintritt, die eigentlich bei dem hohen Überschuß an Olefin zu erwarten gewesen wäre (siehe hierzu "Topics in Phosphorus Chemistry, Vol. 3, Seite 10-11, John Wiley & Sons 1966).

Weiterhin ist gerade in Hinsicht darauf überraschend, daß die Ausbeuten bei dem erfindungsgemäßen Verfahren die Ausbeuten bekannter Verfahren in der Regel übertreffen.

### Beispiel 1

126,4 g (0,8 Mol) Itaconsäuredimethylester werden unter Stickstoffatmosphäre auf 150°C erhitzt und 62,4 g (0,8 Mol) Dimethylphosphanoxid, die bei 45°C flüssig gehalten werden, werden unter lebhaftem Rühren während einer Stunde eingetropft. Anschließend wird drei Stunden bei 150-155°C gehalten. Dann wird gekühlt und bei 0,7 mbar andestilliert bis zu einer Innentemperatur von 165°C. Man erhält nach dem Abkühlen 179 g kristallinen Rückstand mit einem Schmelzpunkt von 78-82°C. Das entspricht einer Ausbeute von 95 % d. Th. Kristallisation aus Ethylacetat ergibt das Produkt mit einem Schmelzpunkt von 89 - 91°C, Siedepunkt: 167°C; 0,5 mbar.

| C₉H₁₇O₅P (236) | | | |
|---|---|---|---|
| ber. | 45,76 % C | 7,20 % H | 13,16 % P |
| gef. | 45,7 % C | 7,09 % H | 13,2 % P |

In gleicher Weise wurde der Diisopropylphosphinylmethylbernsteinsäuredimethylester hergestellt (Reinigung über einen Dünnschichtverdampfer bei einer Badtemperatur von 205°C (0,5 mbar)

| C₁₃H₂₅O₅P (292) | | | |
|---|---|---|---|
| ber. | 53,43 % C | 8,56 % H | 10,62 % P |
| gef. | 53,3 % C | 8,42 % H | 10,7 % P |

### Beispiel 2

36 g (0,25 Mol) Fumarsäuredimethylester werden unter Stickstoffatmosphäre auf 150°C erhitzt und 19,5 g (0,25 Mol) Dimethylphosphanoxid aus einem auf 45°C beheizten Tropftrichter in 50 Minute unter lebhaftem Rühren eingetropft. Dann wird drei Stunden bei 140-150°C nachgerührt und abgekühlt.
Anschließend wird bei 0,5 mbar bis zu einer Innentemperatur von 155°C andestilliert. Es verbleiben 53 g mit einem Schmelzpunkt von 44-48°C. Das entspricht einer Ausbeute von 95 % d. Th.
Eine Fein-Reinigung kann durch Destillation (Sdp: 138-140°C bei 0.2 mbar) erreicht werden.

| C₈H₁₅O₅P (222) | | | |
|---|---|---|---|
| ber. | 43,24 % C | 6,76 % H | 13,96 % P |
| gef. | 43,1 % C | 6,71 % H | 13,4 % P |

### Beispiel 3

197,5 g (1,25 Mol) Itaconsäuredimethylester werden unter Stickstoffatmosphäre auf 150°C erhitzt und 252,5 g (1,25 Mol) Diphenylphosphanoxid aus einem auf 60°C beheizten Tropftrichter unter lebhaftem Rühren in einer Stunde zugetropft. Dann wird drei Stunden bei 140-155°C nachgerührt und anschließend bei 0,5 mbar bis zu einer Innentemperatur von 155°C andestilliert. Dann wird auf 90°C gekühlt und 1 I Toluol zugegeben. Nach dem Abkühlen und Auskristallisation erhält man 380 g mit einem Schmelzpunkt von 80-85°C. Das entspricht einer Ausbeute von 85 % d. Th. Erneute Umkristallisation aus Toluol ergibt ein Produkt mit einem Schmelzpunkt von 91-93°C.

| C₁₉H₂₁O₅P (360) | | | |
|---|---|---|---|
| ber. | 63,33 % C | 5,83 % H | 8,61 % P |
| gef. | 63,1 % C | 5,91 % H | 8,4 % P |

### Beispiel 4

180 g (1,25 Mol) Fumarsäuredimethylester werden unter Stickstoffatmosphäre auf 150°C erhitzt und 252,5 g (1,25 Mol) Diphenylphosphanoxid aus einem auf 60°C beheizten Tropftrichter unter lebhaftem Rühren in einer Stunde zugetropft. Dann wird 90 Minuten bei 150°C nachgerührt. Anschließend läßt man abkühlen. Nach Auskristallisation erhält man 432,5 g mit einem Schmelzpunkt von 127-129°C. Das entspricht einer Ausbeute von 100 % d. Th. Umkristallisation aus Ethylacetat ergibt einen Schmelzpunkt von 131-133°C.

| C₁₈H₁₉O₅P (346) | | | |
|---|---|---|---|
| ber. | 62,43 % C | 5,49 % H | 8,96 % P |
| gef. | 62,4 % C | 5,41 % H | 8,7 % P |

### Beispiel 5

39,5 g (0,25 Mol) Itaconsäuredimethylester werden unter Stickstoffatmosphäre auf 150°C erhitzt und unter lebhaftem Rühren werden während 40 Minuten 54 g (0,25 Mol) 6H-Dibenz-[c,e][1,2]-oxaphosphorin-6-oneindosiert. Dann wird bei 140-150°C 8 Stunden nachgerührt. Anschließend wird destilliert. Man erhält bei einer Übergangstemperatur von 267-275°C bei 0,6 - 1,3 mbar 70 g. Das entspricht einer Ausbeute von 75 % d. Th.

Das Produkt kann durch Digerieren mit Toluol zur Kristallisation gebracht werden, Schmelzpunkt: 94-96°C.

### Beispiel 6

a) Hydrolyse des Dimethylphosphinylmethylbernsteinsäuredimethylesters, hergestellt nach Beispiel 1
80 g (0,34 Mol) Dimethylphosphinylmethylbernsteinsäuredimethylester werden mit einigen Tropfen konzentrierter Salzsäure und 80 ml Wasser zum Rückfluß erhitzt. Über eine 70 cm - Silbermantel-Vigreux-Kolonne destilliert langsam Methanol ab, gleichzeitig werden weitere 20 g Wasser zugetropft. Nach beendeter Umsetzung kristallisiert der Ansatz. Nach Zugabe von Isopropanol wird mehrere Stunden gerührt, dann abgesaugt und getrocknet. Man erhält 65 g Dimethylphosphinylmethylbernsteinsäure mit einem Schmelzpunkt von 139-141°C. Das entspricht einer Ausbeute von 92 % d. Th.

| C₇H₁₃O₅P (208) | | | |
|---|---|---|---|
| ber. | 40,39 % C | 6,25 % H | 14,90 % P |
| gef. | 40,1 % C | 6,1 % H | 14,5 % P |

b) in gleicher Weise wurde die Diisopropyl-Verbindung hergestellt, Schmelzpunkt: 144-150°C

| C₁₁H₂₁O₅P (264) | | | |
|---|---|---|---|
| ber. | 50,0 % C | 7,96 % H | 11,74 % P |
| gef. | 49,9 % C | 7,89 % H | 11,4 % P |

c) Hydrolyse des Dimethylphosphinylbernsteinsäuredimethylesters, hergestellt nach Beispiel 2, wird in gleicher Weise wie unter 6 a) durchgeführt. Man erhält in 95 %iger Ausbeute Dimethylphosphinylbernsteinsäure mit einem Schmelzpunkt von 174-177°C.

| C₆H₁₁O₅P (194) | | | |
|---|---|---|---|
| ber. | 37,11 % C | 5,67 % H | 15,98 % P |
| gef. | 37,05 % C | 5,7 % H | 16,0 % P |

## Patentansprüche

1. Verfahren zur Herstellung phosphorhaltiger Verbindungen der Formel I 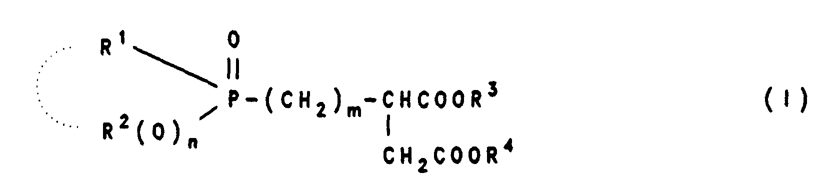 worin R¹ und R² gleich oder verschieden sind und für einen geradkettigen oder verzweigten Alkylrest mit 1 bis 8 Kohlenstoffatomen, einen Cyclohexyl-, einen Cyclopentyl-, einen Aryl-, einen halogen-, alkyl- oder alkoxysubstituierten Arylrest stehen, wobei R¹ und R² zusammen mit dem P-Atom auch einen Ring, insbesondere einen Oxaphosphorinring, bilden können, n und m = 0 oder 1 sind und R³ und R⁴ Alkylreste mit 1 bis 4 Kohlenstoffatomen darstellen oder n = 0, m = 0 oder 1 ist und R³ und R⁴ für H steht, dadurch gekennzeichnet, daß man Verbindungen der Formel II 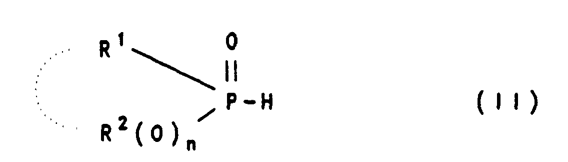 worin R¹ und R² sowie n die obengenannte Bedeutung haben, in Fumarsäure- oder Maleinsäuredialkylester der Formel (III) oder Itaconsäuredialkylester der Formel (IV), 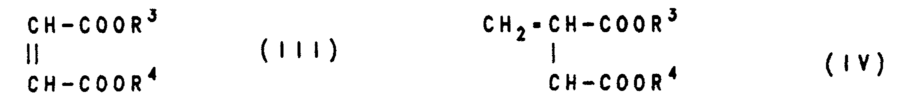 worin R³ und R⁴ die oben angegebene Bedeutung haben, eindosiert und gegebenenfalls einen phosphorhaltigen Dicarbonsäurealkylester der Formel (I), worin n = 0 ist, mit Wasser in Gegenwart katalytischer Mengen einer Säure zu der phosphorhaltigen Dicarbonsäure umsetzt.

2. Verfahren nach Anspruch 1, dadurch gekennzeichnet, daß R¹ und R² zusammen mit dem P-Atom einen Oxaphosphorinring der Formel (V) 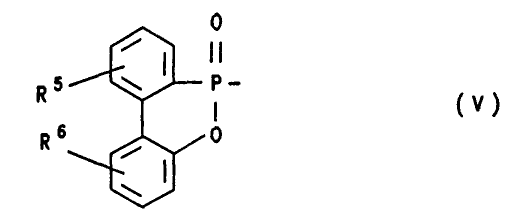 bilden, worin R⁵ und R⁶ für Halogen-, Alkyl- oder Alkoxygruppen stehen.

3. Verfahren nach Anspruch 1, dadurch gekennzeichnet, daß als Verbindungen der Formel (II) sekundäre Phosphanoxide, insbesondere Dimethylphosphanoxid, Methyl-ethyl-phosphanoxid, Dipropylphosphanoxid, Diisopropylphosphanoxid, Di-n-butylphosphanoxid, Di-cyclohexylphosphanoxid, Methyl-phenylphosphanoxid, Diphenylphosphanoxid oder Di-p-tolylphosphanoxid eingesetzt werden.

4. Verfahren nach Anspruch 1, dadurch gekennzeichnet, daß 6H-Dibenz-[c,e][1,2]-oxa-phosphorin-6-on eingesetzt wird.

5. Verfahren nach mindestens einem der Ansprüche 1 bis 4, dadurch gekennzeichnet, daß bei einer Temperatur von 70° bis 180°C, insbesondere 90 bis 170°C, bevorzugt 100 bis 160°C eindosiert wird.

6. Verfahren nach mindestens einem der Ansprüche 1 bis 5, dadurch gekennzeichnet, daß die Eindosierung über einen Zeitraum von 40 Minuten bis 5 Stunden erfolgt.

## Claims

1. A process for preparing phosphorus-containing compounds of the formula I 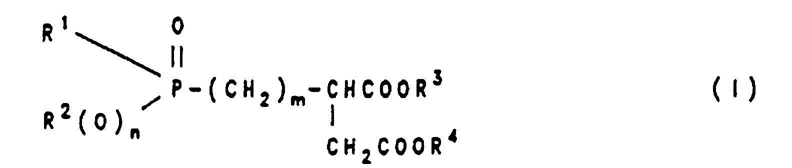 in which R¹ and R² are identical or different and are a straight-chain or branched alkyl radical having 1 to 8 carbon atoms, a cyclohexyl radical, a cyclopentyl radical, an aryl radical or a halogen-, alkyl- or alkoxy-substituted aryl radical, where R¹ and R² together with the phosphorus atom can also form a ring, in particular an oxaphosphorine ring, n and m = 0 or 1 and R³ and R⁴ are alkyl radicals having 1 to 4 carbon atoms or n = 0, m = 0 or 1 and R³ and R⁴ are H, which comprises adding compounds of the formula II 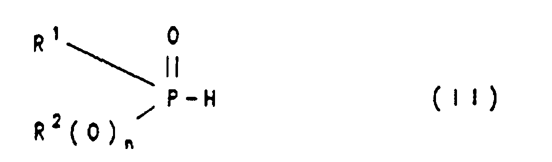 in which R¹ and R² and n have the meaning given above, into dialkyl esters of fumaric acid or of maleic acid of the formula (III) or dialkyl esters of itaconic acid of the formula (IV) 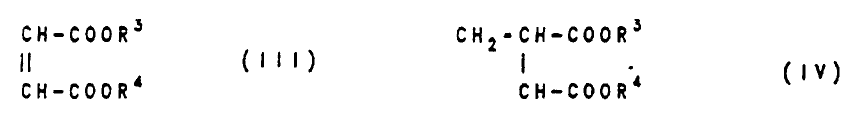 in which R³ and R⁴ have the meaning given above, and, if required, reacting an alkyl ester of a phosphorus-containing dicarboxylic acid of the formula (I), where n = 0, with water in the presence of catalytic amounts of an acid to give the phosphorus-containing dicarboxylic acid.

2. The process as claimed in claim 1, wherein R¹ and R² together with the phosphorus atom form an oxaphosphorine ring of the formula (V) 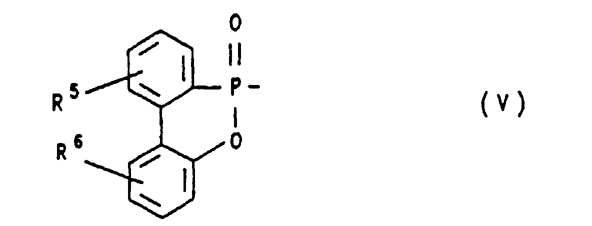 in which R⁵ and R⁶ are halogen, alkyl or alkoxy groups.

3. The process as claimed in claim 1, wherein the compounds of the formula (II) used are secondary phosphine oxides, in particular dimethylphosphine oxide, methylethylphosphine oxide, dipropylphosphine oxide, diisopropylphosphine oxide, di-n-butylphosphine oxide, dicyclohexylphosphine oxide, methylphenylphosphine oxide, diphenylphosphine oxide or di-p-tolylphosphine oxide.

4. The process as claimed in claim 1, wherein 6H-di-benz[c,e]-1,2-oxaphosphorin-6-one is used.

5. The process as claimed in at least one of claims 1 to 4, wherein addition is carried out at a temperature of 70 to 180°C, in particular 90 to 170°C, preferably 100 to 160°C.

6. The process as claimed in at least one of claims 1 to 5, wherein the addition is performed over a period of 40 minutes to 5 hours.

## Revendications

1. Procédé pour la préparation de composés phosphorés de formule I 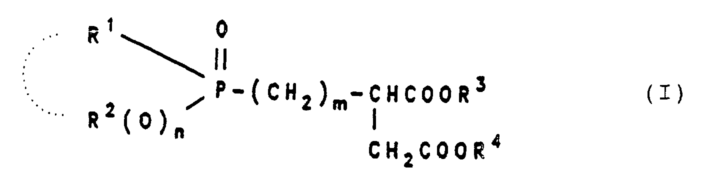 où R¹ et R² sont identiques ou différents et représentent un reste alkyle à chaîne droite ou ramifiée ayant 1 à 8 atomes de carbone, un reste cyclohexyle, un reste cyclopentyle, un reste aryle, un reste aryle substitué par un substituant halogène, alkyle ou alkoxy, R¹ et R² ensemble avec l'atome de P pouvant aussi former un cycle, notamment un cycle oxaphosphore, n et m = 0 ou 1 et R³ et R⁴ représentent des restes alkyle ayant 1 à 4 atomes de carbone ou n = 0, m = 0 ou 1 et R³ et R⁴ représentent un atome d'hydrogène, caractérisé en ce qu'on fait ajoute progressivement des composés de formule II 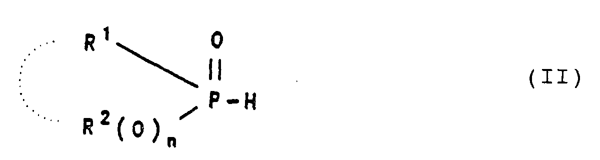 où R¹ et R² ainsi que n possédent la signification citée ci-dessus, à un ester dialkylique de l'acide fumarique ou de l'acide maléique de formule (III) ou un ester dialkylique de l'acide itaconique de formule (IV), 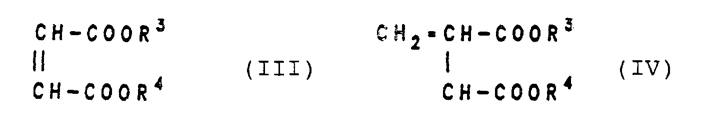 où R³ et R⁴ possèdent la signification donnée ci-dessus, et éventuellement on fait réagir un ester dialkylique d'un acide dicarboxylique phosphoré de formule (I), où n = 0, avec de l'eau en présence de quantités catalytiques d'un acide pour obtenir l'acide dicarboxylique phosphoré.

2. Procédé selon la revendication 1, caractérisé en ce que R¹ et R² forment conjointement avec l'atome de P un cycle oxaphosphore de formule (V) 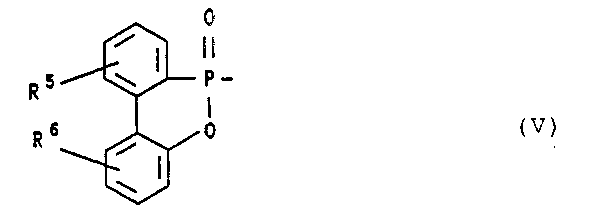 où R⁵ et R⁶ représente des groupes halogène, alkyle ou alkoxy.

3. Procédé selon la revendication 1, caractérisé en ce qu'on utilise en tant que composés de formule (II) des oxydes de phosphane secondaires, en particulier l'oxyde de diméthylphosphane, l'oxyde de méthyléthylphosphane, l'oxyde de dipropylphosphane, l'oxyde de diisopropylphosphane, l'oxyde de di-n-butylphosphane, l'oxyde de dicyclohexylphosphane, l'oxyde de méthylphénylphosphane, l'oxyde de diphénylphosphane, l'oxyde de di-p-tolylphosphane.

4. Procédé selon la revendication 1, caractérisé en ce qu'on utilise la 6H-dibenz-[c,e][1,2]-oxa-phosphorine-6-one.

5. Procédé selon au moins l'une des revendications 1 à 4, caractérisé en ce qu'on effectue l'ajout à une température de 70 à 180°C, en particulier de 90 à 170°C, de préférence de 100 à 160°C.

6. Procédé selon au moins l'une des revendications 1 à 5, caractérisé en ce qu'on effectue l'ajout en l'espace de 40 minutes à 5 heures.
